(19) Europäisches Patentamt
European Patent Office
Office européen des brevets

(11) **EP 3 324 264 A1**

(12) **EUROPEAN PATENT APPLICATION**

(43) Date of publication:
**23.05.2018 Bulletin 2018/21**

(51) Int Cl.:
***G06F 1/16*** *(2006.01)*   ***H04L 29/06*** *(2006.01)*

(21) Application number: **16306518.8**

(22) Date of filing: **18.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **PARROT SHMATES**
**FR-75010 Paris (FR)**

(72) Inventor: **LEVY, Olivier**
**75017 Paris (FR)**

(74) Representative: **Lavoix**
**2, place d'Estienne d'Orves**
**75441 Paris Cedex 09 (FR)**

(54) **FIRST AND SECOND ELECTRONIC MOBILE DEVICES, ELECTRONIC TRANSMISSION SYSTEM FOR TRANSMITTING IMAGE(S) TO WEARABLE DISPLAY DEVICE(S), RELATED ELECTRONIC MOBILE APPARATUS, ELECTRONIC DISPLAY INSTALLATION, METHOD AND COMPUTER PROGRAM**

(57)    A first electronic mobile device (18) comprises:
- a creation unit (40) configured for creating a set of image(s) to be displayed on a group of wearable display device(s) (12), each wearable display device (12) being adapted to be attached to a wearable article of clothing (14);
- a determination unit (42) configured for determining a list of second electronic mobile device(s) intended to receive the created set of image(s); and
- a first transmission unit (44) configured for wireless transmitting to an electronic gateway (22) the created set of image(s) and the determined list of second electronic mobile devices (20), for further wireless transmission by the electronic gateway (22) of the created set of image(s) to the second electronic mobile device(s) (20).

EP 3 324 264 A1

FIG.1

**Description**

The present invention relates to a first electronic mobile device, a second electronic mobile device and an electronic transmission system for transmitting a set of image(s) to a group of wearable display device(s), each wearable display device being adapted to be attached to a wearable article of clothing. Said electronic transmission system comprises such a first electronic mobile device, a group of such second electronic mobile device(s), and an electronic gateway wirelessly connected to the first electronic mobile device and to the group of second electronic mobile device(s).

The invention also relates to an electronic mobile apparatus and an electronic transmission system for transmitting a set of image(s) to a group of wearable display device(s), each wearable display device being adapted to be attached to a wearable article of clothing. Said electronic transmission system comprises a group of such electronic mobile apparatuses, and an electronic gateway wirelessly connected to the group of electronic mobile apparatuses.

The invention also relates to an electronic display installation for displaying a set of image(s), said installation comprising a group of wearable display device(s), each wearable display device being adapted to be attached to a wearable article of clothing; and such an electronic transmission system for transmitting a set of image(s) to the group of wearable display device(s), the group of wearable display device(s) being further configured for displaying the set of image(s).

The invention also relates to a transmission method for transmitting at least one image to a wearable display device, the wearable display device being adapted to be attached to a wearable article of clothing.

The invention also relates to a computer program including software instructions which, when executed by a processor, implement such a transmission method.

The invention concerns the field of wearable wireless displays systems for displaying information, in particular images or videos.

Background of the invention

US 8,626,586 B1 relates to a wearable advertising display system that integrate wireless communications technologies with wearable, dynamic displays for advertising purposes. Wearable displays communicate via a wireless network to receive advertising content and allow for onlooker interaction with advertising content. Multiple displays work in conjunction to provide coordinated advertising. Additionally, advertising usage information is tracked for billing advertising services provided by the wearable advertising display system.

The system for presenting coordinated advertising content via two or more wearable advertising display systems includes an advertising server storing coordinated advertising content and two or more wearable advertising display systems. At least one of the wearable advertising display systems is configured to communicate with the advertising server to receive at least a portion of the coordinated advertising content and further to display the coordinated advertising content.

However, such a system for presenting coordinated advertising content is quite complex and expensive.

Summary of the invention

A goal of the present invention is to propose an easier and less expensive electronic transmission system for transmitting a set of image(s) to a group of wearable display device(s).

To this end, the invention relates to a first electronic mobile device comprising:

- a creation unit configured for creating a set of image(s) to be displayed on a group of wearable display device(s), each wearable display device being adapted to be attached to a wearable article of clothing;
- a determination unit configured for determining a list of second electronic mobile device(s) intended to receive the created set of image(s); and
- a first transmission unit configured for wireless transmitting to an electronic gateway the created set of image(s) and the determined list of second electronic mobile devices, for further wireless transmission by the electronic gateway of the created set of image(s) to the second electronic mobile device(s).

The invention also relates to a second electronic mobile device comprising:

- a reception unit configured for wireless receiving from a first electronic mobile device, via an electronic gateway, at least one image from a set of image(s); and
- a second transmission unit configured for transmitting each received image to a wearable display device, the wearable display device being adapted to be attached to a wearable article of clothing.

The invention also relates to an electronic transmission system for transmitting a set of image(s) to a group of wearable display device(s), each wearable display device being adapted to be attached to a wearable article of clothing, the electronic transmission system comprising:

- a first electronic mobile device, as defined above;
- a group of second electronic mobile device(s), each second electronic mobile device being as defined above; and
- an electronic gateway wirelessly connected to the first electronic mobile device and to the group of second electronic mobile device(s), the gateway being configured for receiving a set of image(s) from the first electronic mobile device and for further transmitting the received set of image(s) to the group of second electronic mobile device(s).

According to other advantageous aspects of the invention, the electronic transmission system comprises one or more of the following features taken alone or according to all technically possible combinations:

- the gateway is further configured for fingerprinting each image in the received set of image(s) and for further transmitting the fingerprinted set of image(s) to the group of second electronic mobile device(s);
- the group of second electronic mobile device(s) includes several second electronic mobile devices and the gateway is further switchable in a first transmission mode for transmitting the same set of image(s) to each second electronic mobile device.

The invention also relates to an electronic mobile apparatus comprising:

- a creation unit configured for creating a set of image(s) to be displayed on a group of wearable display device(s), each wearable display device being adapted to be attached to a wearable article of clothing;
- a determination unit configured for determining a list of other electronic mobile apparatus(es) intended to receive the created set of image(s);
- a first transmission unit configured for wireless transmitting to an electronic gateway the created set of image(s) and the determined list of other electronic mobile apparatus(es), for further wireless transmission by the electronic gateway of the created set of image(s) to the other electronic mobile apparatus(es);
- a reception unit configured for wireless receiving from another electronic mobile apparatus, via the electronic gateway, at least one image from a set of image(s); and
- a second transmission unit configured for transmitting each received image to a corresponding wearable display device.

The invention also relates to an electronic transmission system for transmitting a set of image(s) to a group of wearable display device(s), each wearable display device being adapted to be attached to a wearable article of clothing, the electronic transmission system comprising:

- a group of electronic mobile apparatuses, each electronic mobile apparatus being as defined above; and
- an electronic gateway wirelessly connected to the group of electronic mobile apparatuses, the gateway being configured for receiving a set of image(s) from an electronic mobile apparatus and for further transmitting the received set of image(s) to other electronic mobile apparatus(es).

The invention also relates to an electronic display installation for displaying a set of image(s) comprising:

- a group of wearable display device(s), each wearable display device being adapted to be attached to a wearable article of clothing;
- an electronic transmission system for transmitting a set of image(s) to the group of wearable display device(s),

the group of wearable display device(s) being further configured for displaying the set of image(s);
wherein the electronic transmission system is as defined above.

The invention also relates to a transmission method for transmitting at least one image to a wearable display device, the wearable display device being adapted to be attached to a wearable article of clothing, the method being implemented by an electronic mobile device and comprising:

- wireless receiving from another electronic mobile device, via an electronic gateway, at least one image from a set of image(s); and
- wireless transmitting each received image to the wearable display device.

The invention also relates to a computer program including software instructions which, when executed by a processor, implement a transmission method as defined above.

**Brief description of the drawings**

The invention will be better understood upon reading of the following description, which is given solely by way of example and with reference to the appended drawings, in which:

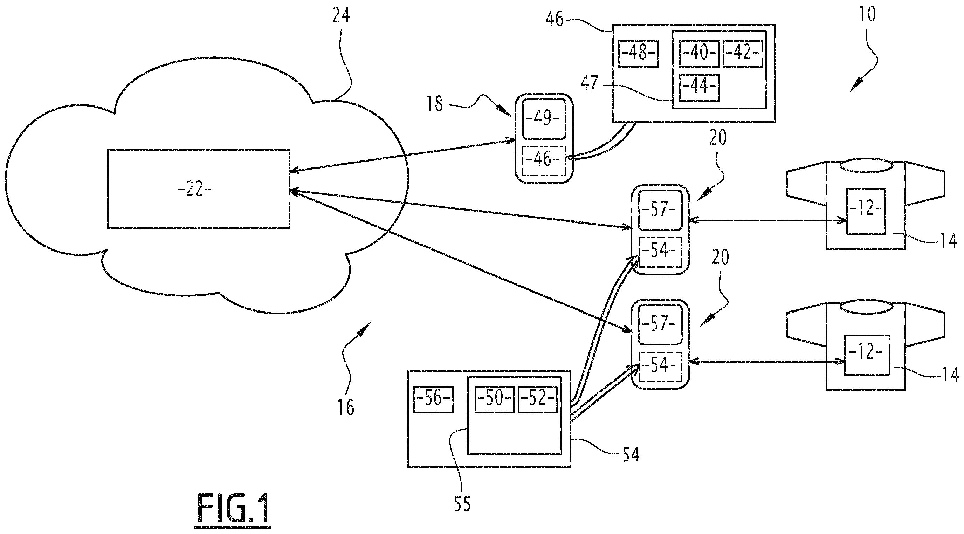

- Figure 1 is a schematic view of an electronic display installation for displaying a set of image(s), according to a first embodiment, the electronic display installation comprising a group of wearable display device(s), each wearable display device being adapted to be attached to a wearable article of clothing, and an electronic transmission system for transmitting a set of image(s) to the group of wearable display device(s), the group of wearable display device(s) being further configured for displaying the set of image(s), the electronic transmission system including one first electronic mobile device, a group of two second electronic mobile devices and an electronic gateway wirelessly connected to the first electronic mobile device and to the group of second electronic mobile devices;

- Figure 2 is a schematic diagram of a wearable display device of Figure 1, the wearable display device including a display, a storage device and a processor;

- Figure 3 is a schematic mapping of a part of the storage device of Figure 2;

- Figure 4 is a schematic representation of a configuration message related to wearable display device;

- Figure 5 is a flowchart of a method, according to the invention, for transmitting and displaying at least one image to a respective wearable display device;

- Figure 6 is a schematic representation of different contents stored, on one hand, in the storage device of a respective wearable display device, and on the other hand, in a memory of a respective second electronic mobile device, leading to an update of the storage device; and

- Figure 7 is a view similar to the one of Figure 1 according to a second embodiment.

## Detailed description of preferred embodiments

In Figure 1, an electronic display installation 10 for displaying a set of image(s) comprises a group of wearable display device(s) 12, each wearable display device 12 being adapted to be attached to a wearable article of clothing 14, and an electronic transmission system 16 for transmitting the set of image(s) to the group of wearable display device(s) 12, the group of wearable display device(s) 12 being further configured for displaying the set of image(s). The electronic transmission system 16 includes a first electronic mobile device 18, a group of second electronic mobile device(s) 20, and an electronic gateway 22 wirelessly connected to the first electronic mobile device 18 and to the group of second electronic mobile device(s) 20. The gateway 22 is included in a network 24 connecting the first electronic mobile device 18 on one hand and the group of second electronic mobile device(s) 20 on the other hand.

In the following of the description, the term 'picture' will be considered synonymous to the term 'image' and the terms 'picture' and 'image' will be alternatively used.

In the example of Figure 1, the electronic display installation 10 comprises two wearable display devices 12, one being for example in a landscape orientation while the other is in a portrait orientation. The electronic transmission system 16 including one first electronic mobile device, a group of two second electronic mobile devices, the gateway being connected to the first electronic mobile device and the two second electronic mobile devices.

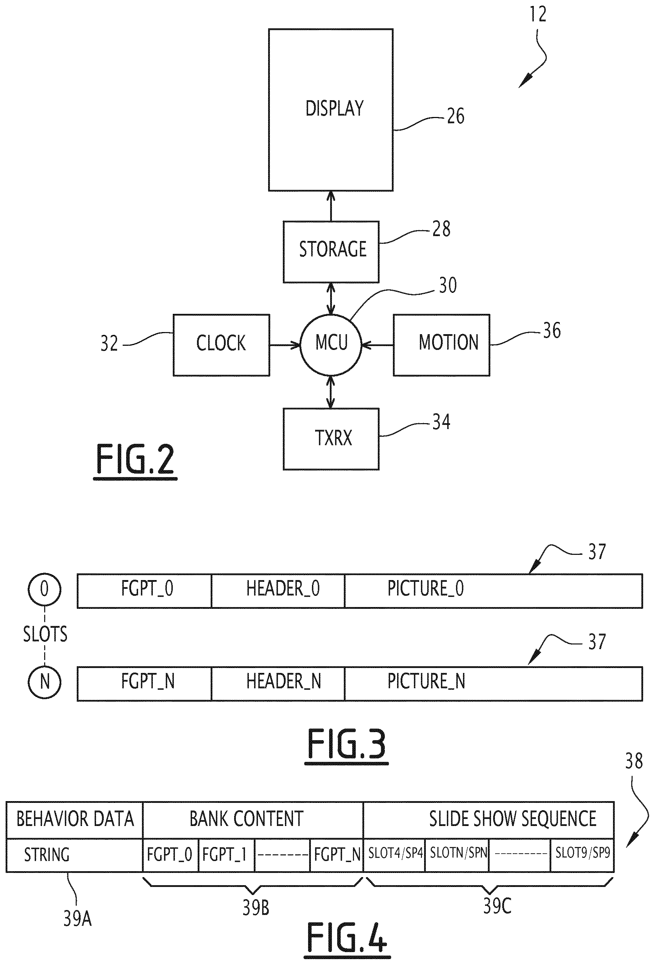

Each wearable display device 12 includes, as shown in Figure 2, a display 26, including a display screen (not shown) and a display module (not shown) for displaying, on the display screen, information such as the set of image(s), or a video which is a series of successive images. The display screen is for example an ink display screen.

Each wearable display device 12 also includes a storage device 28, such as flash memory, for storing information, such as images, videos and software applications, a processing unit 30, such as a microcontroller unit denoted MCU, or a processor, for executing instructions, such as software instructions, the processing unit 30 being connected to the storage device 28, and a clock 32 connected to the processing unit 30. Alternatively, the clock is integrated in the processing unit 30, in particular when the processing unit 30 is a processor. The processing unit is for example configured for performing one or several operations of image processing on each image before forwarding it to the display 26 for its displaying. The image processing operations include for example: resizing, such as zooming and cropping; filtering, such as dithering on P gray levels (with P equal to e.g. 16 or 24), halftone and dot modulation; compressing, such as a compression with a Lempel-Ziv-Welch algorithm, also called LZW algorithm.

Each wearable display device 12 also includes a transceiver 34, denoted TXRX, connected to the microcontroller unit 30, and optionally a motion sensor 36 for detecting movement of the wearable display device. The transceiver 34 is configured for receiving information from an electronic device, such as respective second electronic mobile device 20, and also for transmitting information to said electronic device or to another electronic device. The transceiver 34 is in particular configured for receiving from the second electronic mobile device 20 image(s) to be displayed on the display screen and for transmitting to said second electronic mobile device 20 computed statistical data about the displayed images, on a regular basis or on request from the second electronic mobile device 20. The transceiver 34 is preferably a wireless transceiver, still preferably a short distance wireless transceiver, such a Bluetooth® transceiver compliant with the standard IEEE 802.15, also called Bluetooth® standard, in particular such as a Bluetooth® Low Energy transceiver, also called BLE transceiver.

Each wearable display device 12 is preferably configured for calculating a unique identification code, or unique identifier, also called fingerprint, for each image received from the corresponding second electronic mobile device 20. This allows in particular error detection in the image transmission from the electronic transmission system 16 to the wearable display device 12 as it will be explained in the following of the description. The fingerprint therefore also a function of error detection.

Each calculated fingerprint, also denoted FGPT, is for example an alphanumeric unique identifier, or alphanumeric UID. The algorithm used for calculating each fingerprint is for example a dedicated version of SHA-1 (Secure Hash Algorithm 1) where the created Hash is a unique digest of the binary content of the file.

Alternatively, the algorithm used for calculating each fingerprint is a forensic method which is not binary based and where the fingerprint is computed on a more fuzzy way than the dedicated version of SHA-1 algorithm, by analysis image content and details to produce a unique pattern which will not discriminate very similar images.

According to this alternative, for calculating each fingerprint via a forensic method, the image is for example converted into luminance. To remove noise, smooth high pass & low pass filters are applied and then a look up table is used for a breakdown of the pixels values to 0 (black) or 1 (white). Then the picture is subdivided so as to obtain roughly a plurality of rectangles, e.g. 48 rectangles with 100x100 pixels for an image of 800x600 pixels. As an optional addition, these rectangles partially overlap each other for a better result, e.g. with an overlap approximately equal to 5% of the image size. Further, for each rectangle, the number of black pixels, respectively of white pixels, is counted with a fuzzy binary rule, such as the following fuzzy binary rule according to the percentage of the surface:

$$1000 = \text{white } [100\%, 90\%[;$$

$$0001 = \text{black } [100\%, 90\%[;$$

$$1100 = \text{rather White } [90\%, 70\%[;$$

$$0011 = \text{rather Black } [90\%, 70\%[;$$

and

$$0110 = \text{other surfaces}.$$

Finally, the fingerprint is the binary string corresponding to the successive results of the fuzzy binary rule for the plurality of rectangles. With the aforementioned example of the 48 rectangles with 100x100 pixels for an image of 800x600 pixels and with the 4-bit result of the fuzzy binary rule for each rectangle, the length of the fingerprint is therefore equal to 192 bits or 24 Bytes, indeed 48 x 4 bits =192 bits.

According to this alternative, for comparing two images for which the fingerprint was calculated with the aforementioned forensic method, a binary AND operation is applied on the fingerprints of the two images and the number of matches is counted for each rectangle, for example by sequence of 4 bits with the aforementioned 4-bit result of the fuzzy binary rule according to the following rule:

1000 AND 1000 *or* 0011 AND 0011: full match (white with white, rather black with rather black, etc.);
1000 AND 1100 *or* 0110 AND 0011: fuzzy match (white with rather white, rather black with other, etc.); and
1100 AND 0011 *or* 0110 AND 0001: no match (white with black, black with rather white, etc.).

Optionally, a level of similarity is triggered with an additional tolerance threshold on full and fuzzy matches to retrieve similar images.

The image(s) stored in the storage device 28 of each wearable display device 12 are preferably according to the mapping of Figure 3, with slots 37 numbered from 0 to N, the first slot 37, numbered 0, being used for the first received image and the last slot 37, numbered N, being used for the last received image. Each slot 37 in the storage device 28 contains the fingerprint of the image calculated by the processing unit 30, said fingerprint being denoted FGPT_i where i is an index from 0 to N representing a number of the image. Each slot 37 further contains a header of the image, denoted HEADER_i, and the picture itself for example in RAW format, denoted PICTURE_i. The header contains information related to the picture, for example the picture resolution in pixels.

Each wearable display device 12 is preferably configured for further storing a device configuration information 38 in its storage device 28, the device configuration information 38 containing preferably a behavior data field 39A, a bank content field 39B and a slideshow sequence field 39C, as shown in Figure 4. The behavior data field 39A includes an alphanumeric string with data related to electric energy management and/or behavior of the wearable display device 12. The bank content field 39B includes a list of all the calculated fingerprints for all the images stored in the storage device 28, from FGPT_0 to FGPT_N. The slideshow sequence field 39C includes the animation sequence with an ordered list of the images to be displayed and the display time, or display duration, for each image to be displayed.

Each wearable display device 12 is preferably configured for timestamping each displaying of an image and for computing statistical data about the displayed images, the timestamping and the statistical data computation being for example operated by the processing unit 30. The computed statistical data are for example associated with each calculated fingerprint. In other words, each image is identified via its fingerprint for storing the statistical data which are related to this image.

The computed statistical data include for example: number of times the image was displayed, time of displaying for each image. The computed statistical data are stored in the storage device 28 before being transmitted to an external device, such as the corresponding second electronic mobile device 20, and after their transmission, are regularly deleted in the storage device 28.

As an optional addition, each wearable display device 12 is also configured to store, for example in storage device 28, an unique identifier of the second electronic mobile device 20 allowed to communicate with said wearable display device 12. This allows a unique pairing between the wearable display device 12 and the corresponding second electronic mobile device 20, therefore avoiding a takeover of the wearable display device 12 by a device other than the corresponding second electronic mobile device 20, said other device being not allowed to communicate with the wearable display device 12. According to this optional addition, each wearable display device 12 further includes a reset button in order to reset the wearable display device 12 and to unlock the pairing between the wearable display device 12 and the corresponding second electronic mobile device 20.

The wearable article of clothing 14 is for example a T-shirt, a sweat shirt, a shirt, a pullover, or a jacket. Alternatively, the wearable article of clothing 14 is a backpack or a bag.

The electronic transmission system 16 proposes a master/slave architecture without server, to the contrary of the transmission system of the prior art wearable advertising display system disclosed in document US 8,626,586 B1. In the electronic transmission system 16 with this master/slave architecture, the master device is the first electronic mobile device 18 and the slave(s) is (are) the second electronic mobile device(s) 20, which is (are) wirelessly connected to the first electronic mobile device 18 via the electronic gateway 22.

The first electronic mobile device 18 comprises a creation unit 40 configured for creating a set of image(s), such as a slideshow, to be displayed on the group of wearable display device(s) 12, a determination unit 42 configured for determining a list of second electronic mobile device(s) 20 intended to receive the created set of image(s), and a first transmission unit 44 configured for wireless transmitting to the electronic gateway 22 the created set of image(s) and the determined list of second electronic mobile devices 20, for further wireless transmission by the electronic gateway 22 of the created set of image(s) to the second electronic mobile device(s) 20.

The first electronic mobile device 18 includes a first processing unit 46 formed for example of a first memory 47 and of a first processor 48 coupled to the first memory 47. The first electronic mobile device 18 also includes a first display screen 49.

The first electronic mobile device 18 is for example a mobile phone, such as a smartphone, a tablet or a mobile computer, such as a laptop.

In the example of Figure 1, the creation unit 40, the determination unit 42 and the first transmission unit 44 are for example each realized, i.e. implemented, as a software executable by the first processor 48. The first memory 47 of the first processing unit 46 is then adapted to store a creation software configured to create the set of image(s), a determination software configured to determine a list of second electronic mobile device(s) 20 intended to receive the created set of image(s), and a first transmission software configured to transmit to the electronic gateway 22 the created set of image(s) and the determined list of second electronic mobile devices 20. The first processor 48 of the first processing unit 46 is then configured to execute the creation software, the determination software and the first transmission software.

As a variant not shown, the creation unit 40, the determination unit 42 and the first transmission unit 44 are each in the form of a programmable logic component, such as a Field Programmable Gate Array or FPGA, or in the form of a dedicated integrated circuit, such as an Application Specific integrated Circuit or ASIC.

Each second electronic mobile device 20 comprises a reception unit 50 configured for wireless receiving from the first electronic mobile device 18, via the electronic gateway 22, at least one image from a set of image(s), and a second transmission unit 52 configured for transmitting each received image to a respective wearable display device 12, for further displaying of the transmitted image(s) on the display 26 of said wearable display device 12.

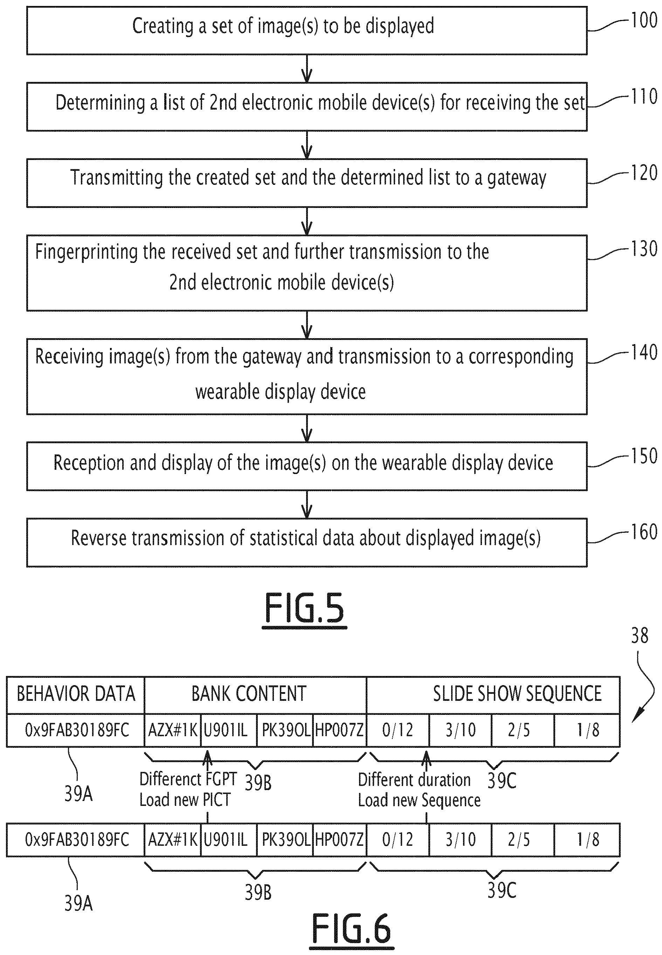

Optionally, the second transmission unit 52 is further configured for computing a mobile configuration information 53 according to the image(s) and related information received from the first electronic mobile device 18 via the electronic gateway 22. The mobile configuration information 53 computed by the second transmission unit 52 contains the same fields as the device configuration information 38 stored in the storage device 28 of the corresponding wearable display device 12, as shown in Figure 6. The mobile configuration information 53 contains therefore preferably the behavior data field 39A, the bank content field 39B and the slideshow sequence field 39C.

Each second electronic mobile device 20 includes a second processing unit 54 formed for example of a second memory 55 and of a second processor 56 coupled to the second memory 55. Each second electronic mobile device 20 also includes a second display screen 57.

Each second electronic mobile device 20 is for example a mobile phone, such as a smartphone, a tablet or a mobile computer, such as a laptop.

In the example of Figure 1, the reception unit 50 and the second transmission unit 52 are for example each realized, i.e. implemented, as a software executable by the second processor 56. The second memory 55 of the second processing unit 54 is then adapted to store a reception software configured to receive from the first electronic mobile device 18, via the electronic gateway 22, at least one image from a set of image(s), and a second transmission software configured to transmit each received image to a respective wearable display device 12. The second processor 56 of the second processing unit 54 is then configured to execute the reception software and the second transmission software.

As a variant not shown, the reception unit 50 and the second transmission unit 52 are each in the form of a programmable logic component, such as a Field Programmable Gate Array or FPGA, or in the form of a dedicated integrated circuit, such as an Application Specific integrated Circuit or ASIC.

The gateway 22 is configured for receiving a set of image(s) from the first electronic mobile device 18 and for further transmitting the received set of image(s) to the group of second electronic mobile device(s) 20.

In particular, the gateway 22 is configured for retransmitting a set of image(s) from the first electronic mobile device 18 to the group of second electronic mobile device(s) 20, without adding or removing image(s) from the set of image(s) and without modifying a list of recipients among the group of second electronic mobile device(s) 20.

Optionally, the gateway 22 is further configured for fingerprinting each image in the received set of image(s) and for further transmitting the fingerprinted set of image(s) to the group of second electronic mobile device(s) 20. In other words, the gateway 22 is accordingly configured for calculating a unique identification code, or unique identifier, also called fingerprint, for each image in the received set of image(s) and for further transmitting the set of image(s) with the related calculated fingerprints to the group of second electronic mobile device(s) 20. Each calculated fingerprint, also denoted FGPT, is for example an alphanumeric unique identifier, or alphanumeric UID.

The algorithm used for calculating each fingerprint in the gateway 22 is the same as the one used in each wearable display device 12 for calculating the fingerprint of each received image.

As an optional addition, if the group of second electronic mobile device(s) 20 includes several second electronic mobile devices 20, the gateway 22 is preferably operable among several transmission modes. The gateway 22 is for example switchable into a first transmission mode for transmitting the same set of image(s) to each second electronic mobile device 20. In addition or alternatively, the gateway 22 is for example switchable into a second transmission mode for transmitting a respective part of the set of image(s) to each second electronic mobile device 20, all the transmitted parts forming the whole set of image(s). As a further optional addition, the gateway 22 is switchable between at least the first transmission mode for transmitting the same content to each second electronic mobile device 20 and the second transmission mode for transmitting a respective part of a given content to each second electronic mobile device 20, all the transmitted parts forming the whole given content.

The network 24 is a local network, such as a LAN. Alternatively, the network 24 is the Internet network. Still alternatively, the network 24 is partly a local network and partly the Internet network.

The operation of the electronic display installation 10 according to the invention will now be explained in view of Figure 5 representing a flowchart of a method, according to the invention, for transmitting and further displaying at least one image on a respective wearable display device 12.

Initially, in step 100, the first electronic mobile device 18 creates, via its creation unit 40, the set of image(s), for example a slideshow, to be displayed on the group of wearable display device(s) 12.

The first electronic mobile device 18 then determines, in step 110 and via its determination unit 42, the list of second electronic mobile device(s) 20 intended to receive the created set of image(s). In other words, the first electronic mobile device 18 determines the list of the recipient devices among all the second electronic mobile device(s) 20. The list of the recipient devices is for example determined from among a contact list which is stored in the first memory 47 of the first electronic mobile device 18. The list of the recipient devices therefore corresponds preferably to a selection of contacts from among said contact list.

Further, in step 120, the first electronic mobile device 18 transmits, via its first transmission unit 44, the created set of image(s) and the determined list of second electronic mobile devices 20 to destination of the electronic gateway 22, for further wireless transmission by the electronic gateway 22 of the created set of image(s) to the second electronic mobile device(s) 20.

After receiving the created set of image(s) from the first electronic mobile device 18 which operates as the master device, the gateway 22 fingerprints, in step 130, each image in the received set of image(s) and then transmits the fingerprinted set of image(s) to the group of second electronic mobile device(s) 20 as indicated in the determined list of second electronic mobile devices 20 received from the first electronic mobile device 18. More precisely, the gateway 22 transmits, to the corresponding list of second electronic mobile devices 20 and for each image, an object including the picture and the associated calculated fingerprint.

In step 140, each second electronic mobile device 20 of the determined list of second electronic mobile devices 20 then receives the corresponding object(s) from the gateway 22.

Optionally, in this step 140, each second electronic mobile device 20 then computes its mobile configuration information 53 according to the image(s) and related information received from the first electronic mobile device 18 via the electronic gateway 22. Each second electronic mobile device 20 further compares its computed mobile configuration information 53 with the device configuration information 38 stored in the storage device 28 of the corresponding wearable display device 12, in order to determine if a new picture and/or a new sequence needs to be loaded in the storage device 28 of the corresponding wearable display device 12, as illustrated in Figure 6.

In the example of Figure 6, the comparison between the mobile configuration information 53 and the device configuration information 38 shows that the fingerprint FGPT_1 related to the second image differs from the mobile configuration information 53, where it is equal to #OULOP, to the device configuration information 38, where it is equal to U901IL, and that the display duration related to the second image also differs from the mobile configuration information 53, where it is equal to 7 seconds, to the device configuration information 38, where it is equal to 10 seconds. Accordingly, the second electronic mobile device 20 transmits the second image and the related display duration to the associated wearable display device 12.

Such a comparison of the mobile configuration information 53 and the device configuration information 38 allows reducing the transmission time for transmitting the image(s) from the second electronic mobile device 20 to the associated wearable display device 12.

In other words, in step 140, the image(s) received by each second electronic mobile device 20 from the first electronic mobile device 18 via the electronic gateway 22 are compared to the image(s) already stored in the corresponding wearable display device 12 so as to transmit from the second electronic mobile device 20 to the corresponding wearable display device 12 only the image(s) which are not already stored in the corresponding wearable display device 12. This mechanism allows a reduction of the transmission time between the second electronic mobile device 20 and the corresponding wearable display device 12, and therefore improves the efficiency of the electronic display installation 10 according to the invention.

In step 150, each wearable display device 12 displays on its display screen the received image(s). Each wearable display device 12 displays preferably the image(s) according to its device configuration information 38 updated in view of the mobile configuration information 53 computed by its associated second electronic mobile device 20.

During the display of image(s) in step 150, each wearable display device 12 also preferably timestamps each displaying of an image and computes statistical data about the displayed images. The computed statistical data are for example associated with each calculated fingerprint and are stored in the storage device 28.

Finally, in step 160, each wearable display device 12 transmits back to the corresponding second electronic mobile device 20 the statistical data computed about the displayed images. This reverse transmission of statistical data about the displayed images allows a better monitoring of the images displayed by the wearable display device(s) 12.

This image(s) transmission from the electronic transmission system 16 to the wearable display device(s) 12 is thus easier with the master/slave architecture of the electronic display installation 10 according to the invention, the master device being the first electronic mobile device 18 and the slave(s) being the second electronic mobile device(s) 20, which is (are) wirelessly connected to the first electronic mobile device 18 via the electronic gateway 22. In other words, the electronic display installation 10 according to the invention avoids the need of a server located in the network for creating the set of image(s) and transmitting it to the wearable display device(s) 12.

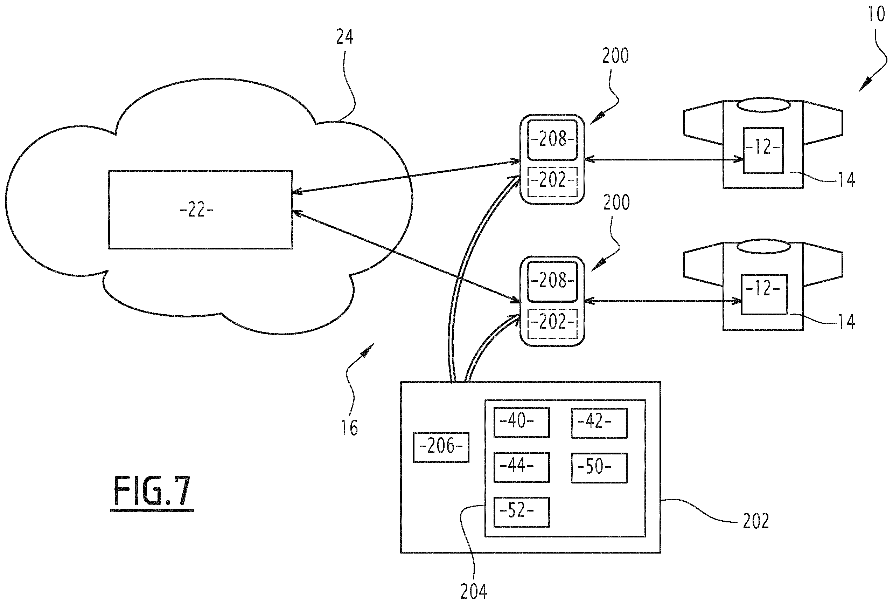

Figure 7 illustrates illustrate a second embodiment of the invention for which the elements like those in the first embodiment described earlier are marked with identical references and are therefore not described again.

According to the second embodiment, the electronic transmission system 16 comprises a group of electronic mobile apparatuses 200 and the electronic gateway 22 wirelessly connected to the group of electronic mobile apparatuses 200, the gateway 22 being configured for receiving a set of image(s) from an electronic mobile apparatus 200 and for further transmitting the received set of image(s) to other electronic mobile apparatus(es) 200.

Each electronic mobile apparatus 200 comprises the creation unit 40 configured for creating a set of image(s) to be displayed on the group of wearable display device(s) 12, and the determination unit 42 configured for determining a list of other electronic mobile apparatus(es) 200 intended to receive the created set of image(s).

Each electronic mobile apparatus 200 further comprises the first transmission unit 44 configured for wireless transmitting to the electronic gateway 22 the created set of image(s) and the determined list of other electronic mobile apparatus(es) 200, for further wireless transmission by the electronic gateway 22 of the created set of image(s) to the other electronic mobile apparatus(es) 200.

Each electronic mobile apparatus 200 further comprises the reception unit 50 configured for wireless receiving from another electronic mobile apparatus 200, via the electronic gateway 22, at least one image from a set of image(s), and the second transmission unit 52 configured for transmitting each received image to a corresponding wearable display device 12.

In other words, each electronic mobile apparatus 200 is the combination of the first electronic mobile device 18 and of a second electronic mobile device 20 of the first embodiment. Each electronic mobile apparatus 200 is therefore adapted to operate as the master or as a slave in the master/salve architecture of the electronic display installation 10 according to this second embodiment.

Each electronic mobile apparatus 200 includes a processing unit 202 formed for example of a memory 204 and of a processor 206 coupled to the memory 204. The electronic mobile apparatus 200 also includes a display screen 208.

The first electronic mobile device 18 is for example a mobile phone, such as a smartphone, a tablet or a mobile computer, such as a laptop.

In the example of Figure 7, the creation unit 40, the determination unit 42 and the first transmission unit 44 are for example each realized, i.e. implemented, as a software executable by the processor 206. The memory 204 of the processing unit 202 is then adapted to store a creation software configured to create the set of image(s), a determination software configured to determine a list of other electronic mobile apparatus(es) 200 intended to receive the created set of image(s), and a first transmission software configured to transmit to the electronic gateway 22 the created set of image(s) and the determined list of other electronic mobile apparatus(es) 200. The processor 206 of the processing unit 204 is then configured to execute the creation software, the determination software and the first transmission software.

As a variant not shown, the creation unit 40, the determination unit 42 and the first transmission unit 44 are each in the form of a programmable logic component, such as a Field Programmable Gate Array or FPGA, or in the form of a dedicated integrated circuit, such as an Application Specific integrated Circuit or ASIC.

In the example of Figure 7, the reception unit 50 and the second transmission unit 52 are for example each realized, i.e. implemented, as a software executable by the processor 206. The memory 204 of the processing unit 202 is then adapted to store a reception software configured to receive from another electronic mobile apparatus 200, via the electronic gateway 22, at least one image from a set of image(s), and a second transmission software configured to transmit each received image to a respective wearable display device 12. The processor 206 of the processing unit 202 is then configured to execute the reception software and the second transmission software.

As a variant not shown, the reception unit 50 and the second transmission unit 52 are each in the form of a programmable logic component, such as a Field Programmable Gate Array or FPGA, or in the form of a dedicated integrated circuit, such as an Application Specific integrated Circuit or ASIC.

The operation of this second embodiment is like the one of the first embodiment, and is therefore not described again. It will be apparent for the skilled person that when a given electronic mobile apparatus 200 operates as a master device, then its creation unit 40, its determination unit 42 and its first transmission unit 44 are operated to this end. Conversely, when a given electronic mobile apparatus 200 operates as a slave device, then its reception unit 50 and its second transmission unit 52 are operated in this case.

The advantages of this second embodiment are like the ones of the first embodiment, and are therefore not described again.

**Claims**

1. First electronic mobile device (18) comprising:

- a creation unit (40) configured for creating a set of image(s) to be displayed on a group of wearable display device(s) (12), each wearable display device (12) being adapted to be attached to a wearable article of clothing (14);
- a determination unit (42) configured for determining a list of second electronic mobile device(s) intended to receive the created set of image(s); and
- a first transmission unit (44) configured for wireless transmitting to an electronic gateway (22) the created set of image(s) and the determined list of second electronic mobile devices (20), for further wireless transmission by the electronic gateway (22) of the created set of image(s) to the second electronic mobile device(s) (20).

2. Second electronic mobile device (20) comprising:

- a reception unit (50) configured for wireless receiving from a first electronic mobile device (18), via an electronic gateway (22), at least one image from a set of image(s); and
- a second transmission unit (52) configured for transmitting each received image to a wearable display device (12), the wearable display device (12) being adapted to be attached to a wearable article of clothing (14).

3. Electronic transmission system (16) for transmitting a set of image(s) to a group of wearable display device(s) (12), each wearable display device (12) being adapted to be attached to a wearable article of clothing (14), the electronic transmission system (16) comprising:

- a first electronic mobile device (18) according to claim 1;
- a group of second electronic mobile device(s) (20), each second electronic mobile device (20) being according to claim 2; and
- an electronic gateway (22) wirelessly connected to the first electronic mobile device (18) and to the group of second electronic mobile device(s) (20), the gateway (22) being configured for receiving a set of image(s) from the first electronic mobile device (18) and for further transmitting the received set of image(s) to the group of second electronic mobile device(s) (20).

4. Electronic transmission system (16) according to claim 3, wherein the gateway (22) is further configured for fingerprinting each image in the received set of image(s) and for further transmitting the fingerprinted set of image(s) to the group of second electronic mobile device(s) (20).

5. Electronic transmission system (16) according to claim 3 or 4, wherein the group of second electronic mobile device(s) (20) includes several second electronic mobile devices (20) and the gateway (22) is further switchable in a first transmission mode for transmitting the same set of image(s) to each second electronic mobile device (20).

6. Electronic mobile apparatus (200) comprising:

- a creation unit (40) configured for creating a set of image(s) to be displayed on a group of wearable display device(s) (12), each wearable display device (12) being adapted to be attached to a wearable article of clothing (14);
- a determination unit (42) configured for determining a list of other electronic mobile apparatus(es) (200) intended to receive the created set of image(s);
- a first transmission unit (44) configured for wireless transmitting to an electronic gateway (22) the created set of image(s) and the determined list of other electronic mobile apparatus(es) (200), for further wireless transmission by the electronic gateway (22) of the created set of image(s) to the other electronic mobile apparatus(es) (200);
- a reception unit (50) configured for wireless receiving from another electronic mobile apparatus (200), via the electronic gateway (22), at least one image from a set of image(s); and
- a second transmission unit (52) configured for transmitting each received image to a corresponding wearable display device (12).

7. Electronic transmission system (16) for transmitting a set of image(s) to a group of wearable display device(s) (12), each wearable display device (12) being adapted to be attached to a wearable article of clothing (14), the electronic transmission system (16) comprising:

- a group of electronic mobile apparatuses (200), each electronic mobile apparatus (200) being according to claim 6; and
- an electronic gateway (22) wirelessly connected to the group of electronic mobile apparatuses (200), the gateway (22) being configured for receiving a set of image(s) from an electronic mobile apparatus (200) and for further transmitting the received set of image(s) to other electronic mobile apparatus(es) (200).

8. Electronic display installation (10) for displaying a set of image(s) comprising:

- a group of wearable display device(s) (12), each wearable display device (12) being adapted to be attached to a wearable article of clothing (14);
- an electronic transmission system (16) for transmitting a set of image(s) to the group of wearable display device(s) (12),

the group of wearable display device(s) (12) being further configured for displaying the set of image(s); wherein the electronic transmission system (16) is according to any one of claims 3 to 5 and 7.

9. Method for transmitting at least one image to a wearable display device (12), the wearable display device (12) being adapted to be attached to a wearable article of clothing (14), the method being implemented by an electronic mobile device (20) and comprising:

- wireless receiving (140) from another electronic mobile device (18), via an electronic gateway (22), at least one image from a set of image(s); and
- wireless transmitting (140) each received image to the wearable display device (12).

10. Computer program including software instructions which, when executed by a processor, implement a method according to claim 9.

## FIG.1

EP 3 324 264 A1

## FIG.2

## FIG.3

## FIG.4

Creating a set of image(s) to be displayed — 100

Determining a list of 2nd electronic mobile device(s) for receiving the set — 110

Transmitting the created set and the determined list to a gateway — 120

Fingerprinting the received set and further transmission to the 2nd electronic mobile device(s) — 130

Receiving image(s) from the gateway and transmission to a corresponding wearable display device — 140

Reception and display of the image(s) on the wearable display device — 150

Reverse transmission of statistical data about displayed image(s) — 160

## FIG.5

38

| BEHAVIOR DATA | BANK CONTENT | | | | SLIDE SHOW SEQUENCE | | | |
|---|---|---|---|---|---|---|---|---|
| 0x9FAB30189FC | AZX#1K | U901IL | PK39OL | HP007Z | 0/12 | 3/10 | 2/5 | 1/8 |

39A          Differenct FGPT 39B          Different duration 39C
             Load new PICT                 Load new Sequence

| BEHAVIOR DATA | BANK CONTENT | | | | SLIDE SHOW SEQUENCE | | | |
|---|---|---|---|---|---|---|---|---|
| 0x9FAB30189FC | AZX#1K | U901IL | PK39OL | HP007Z | 0/12 | 3/10 | 2/5 | 1/8 |

39A                    39B                          39C

## FIG.6

FIG.7

Europäisches
Patentamt

European
Patent Office

Office européen
des brevets

## EUROPEAN SEARCH REPORT

Application Number

EP 16 30 6518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/116814 A1 (SMARTWATCHER TECHNOLOGIES AG [CH]) 28 July 2016 (2016-07-28) * figures 1, 2, 7 * * paragraph [0017] * * paragraph [0020] * * paragraph [0057] - paragraph [0060] * ----- | 1-10 | INV. G06F1/16 H04L29/06 |
| A | US 2016/277784 A1 (DE MATTEI MARK ANTHONY [US]) 22 September 2016 (2016-09-22) * figures 1,6 * * paragraph [0037] * * paragraph [0077] * * paragraph [0090] - paragraph [0091] * ----- | 1-10 | |

TECHNICAL FIELDS
SEARCHED      (IPC)

G06F
H04L

The present search report has been drawn up for all claims

| Place of search | Date of completion of the search | Examiner |
|---|---|---|
| The Hague | 16 May 2017 | Gutiérrez García, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6518

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2017

| Patent document cited in search report | | Publication date | Patent family member(s) | | Publication date |
|---|---|---|---|---|---|
| WO 2016116814 | A1 | 28-07-2016 | NONE | | |
| US 2016277784 | A1 | 22-09-2016 | US 2012204307 | A1 | 16-08-2012 |
| | | | US 2016277784 | A1 | 22-09-2016 |
| | | | WO 2012100082 | A2 | 26-07-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8626586 B1